# EUROPÄISCHE PATENTSCHRIFT

(11) **EP 3 133 918 B1**
(45) Veröffentlichungstag und Bekanntmachung des Hinweises auf die Patenterteilung: **10.07.2019**
(21) Anmeldenummer: 15722090.6
(22) Anmeldetag: 17.04.2015
(51) Int. Cl.: A01N 33/12, A01N 31/14, A01N 31/02, A01N 25/02, A01P 1/00

(54) **HÄNDEDESINFEKTIONSMITTEL**
HAND DISINFECTING COMPOSITION
DISINFECTANT POUR LES MAINS

(30) Priorität: 19.04.2014 DE 102014005807
(43) Veröffentlichungstag der Anmeldung: 01.03.2017
(73) Patentinhaber: Hagleitner, Hans Georg, 5700 Zell am See (AT)
(72) Erfinder: WIDULLE, Herbert, 22547 Hamburg (DE)
(74) Vertreter: Vögele, Andreas
(86) Internationale Anmeldenummer: PCT/EP2015/058446
(87) Internationale Veröffentlichungsnummer: WO 2015/158918

(56) Entgegenhaltungen:
- WO-A1-2010/127227
- WO-A2-2006/099359
- WO-A2-2012/034032
- WO-A2-2013/067150
- US-A- 3 160 555
- US-A1- 2005 113 276
- TONGFAN SUN ET AL: "Density, Viscosity and Thermal Conductivity of Aqueous Solutions of Propylene Glycol, Dipropylene Glycol, and Tripropylene Glycol between 290 K and 460 K", JOURNAL OF CHEMICAL & ENGINEERING DATA, Bd. 49, Nr. 5, 1. September 2004 (2004-09-01), Seiten 1311-1317, XP055195043, ISSN: 0021-9568, DOI: 10.1021/je049960h
- DOW: "A GUIDE TO GLYCOLS", INTERNET CITATION, 31. Dezember 2003 (2003-12-31), Seiten 1-58, XP002696752, Gefunden im Internet: URL:http://msdssearch.dow.com/PublishedLit eratureDOWCOM/dh_0047/0901b803800479d9.pdf ?filepath=propyleneglycol/pdfs/noreg/117-0 1682.pdf&fromPage=GetDoc [gefunden am 2013-05-23]
- .: "Chapter 2: Surface-acive agents" In: "Russell, Hugo & Ayliffe's Principles and Practice of Disinfection, Preservation and Sterilization", 1 January 2013 (2013-01-01), Wiley-Blackwell, U.K., XP055430915, ISBN: 978-1-4443-3325-1 pages 21-22,

## Beschreibung

### Stand der Technik

Die vorliegende Erfindung betrifft Händedesinfektionsmittel, wobei das Händedesinfektionsmittel mindestens 40 Gewichtsprozent Wasser, mindestens einen Löse-Ether, mindestens einen Fettkörper und 0,1 bis 20 Gewichtsprozent eines mikrobiziden kationischen Tensids enthält.

Der Stand der Technik wird bei Händedesinfektionsmitteln durch die Testmethoden beschrieben, mit denen ein Mittel auf seine Effizienz geprüft wird. Zurzeit müssen alle Mittel, die für eine hygienische Händedesinfektion zugelassen werden sollen, nach der Vorschrift EN1500 geprüft werden. Die EN 1500 verwendet als mikrobizide Referenzsubstanz 60 Volumenprozent 2-Propanol in Wasser. Die Referenzsubstanz 60 volumenprozentiges 2-Propanol führt dazu, dass langsam wirkende Wirkstoffe, wie zum Beispiel Chlorhexidindigluconat den Test nicht bestehen können, da bei Wirkungseintritt die maximal erlaubte Einwirkdauer der Testsubstanz überschritten worden ist. Die EN 1500 bevorzugt schnellwirkende Desinfektionsmittelwirkstoffe wie Ethanol und Propanole sowie Chlor und Sauerstoffabspalter. Die Testmethodik führt aber auch dazu, dass die Haut des Anwenders nach der Desinfektion nicht mehr vor Krankheitserregern geschützt sein muss, wie es zum Beispiel bei einer Desinfektion mit Chlorhexidin der Fall wäre. Die üblichen Gehalte von weniger als einem Prozent quaternärer Ammoniumverbindungen und Händedesinfektionsmitteln, die als Wirkstoff Ethanol oder Propanol enthalten, begründen keine Langzeitwirkung, wie die Ergebnisse von Testungen entsprechend den Vorschriften für die chirurgische Händedesinfektion zeigen. In diesen Fällen ist die Wirksamkeit von alkoholischen Händedesinfektionsmitteln mit und ohne Zusatz quaternärer Ammoniumverbindungen in etwa gleich. Bekannt ist ebenfalls, dass Produkte möglich sind, die als Wirkstoff ungefähr vier Prozent einer quaternären Ammoniumverbindung oder eines Guanidins enthalten und die neben dieser Verbindung so viele Lösungsvermittler wie Propylenglycol, Butylenglycol und andere Polyalkohole enthalten, dass die Produkte auf der Haut entfettend wirkten. Leider waren alle diese Produkte nur wirksam entsprechend der neuen EN 1499, Händedekontamination, die nur geringeren Anforderungen als die EN 1500 genügen müssen. Mittel, die nur der EN1499 genügen müssen, müssen in einem Vergleichstest nur besser sein als Seife. Während für das Bestehen der EN 1500 in der Regel eine Keimreduktion von 4,5 log-Stufen erforderlich ist, genügen für das Bestehen der EN 1499 in der Regel 3 log-Stufen, also nur drei Prozent der Reduktion, die die EN 1500 fordert. Keines dieser Produkte erreichte die gleiche Wirksamkeit wie Ethanol.

Versuche haben vor vielen Jahren gezeigt, dass Emulsionen, die quaternäre Ammoniumverbindungen als Emulgatoren nutzten, nach den Testmethoden der DGHM keine mikrobizide Wirkung auf den Händen zeigten. Diese Produkte sind weder ausreichend wirksam für eine hygienische Händedesinfektion nach EN1500 noch für eine Händedekontamination nach EN1499, geschweige denn entsprechend den Regeln für eine chirurgische Händedesinfektion. Die Produkte zeigten keine Entfettung der Haut und waren sehr angenehm in der Anwendung, nur waren sie nicht oder nicht ausreichend wirksam.

Ein weiterer Nachteil der alkoholischen Händedesinfektionsmittel ist die hohe Verdampfungsrate des Ethanols oder Propanols. Die hohe Flüchtigkeit führt dazu, dass für die vollständige Befeuchtung der gesamten Haut der Hände mehr Mittel benötigt wird, als dem Volumen der Haut auf den Händen entspricht. Die Epidermis, und nur die wird mit dem alkoholischen Mittel durchtränkt, hat auf beiden Händen zusammen ein Gesamtvolumen von einem Kubikzentimeter. Trotzdem werden mindestens 3 ml, also das dreifache Volumen benötigt, um die Haut auch nur kurzfristig zu desinfizieren. Ist der Verwender nicht ausreichend in dem Vorgang des Desinfizierens geschult, dann ist auch diese Menge nicht ausreichend.

In mehreren europäischen Ländern ist es nicht mehr möglich, alkoholische Händedesinfektionsmittel in Spendern für jedermann frei zugänglich auf den Fluren anzubieten, wie es für eine ausreichende Hygiene in Krankenhäusern notwendig ist. Der Grund ist eine massive Alkoholsucht bei einem, wenn auch kleinen, Teil der Bevölkerung. Dieser schwer alkoholsüchtige Teil der Bevölkerung trinkt die Händedesinfektionsmittel trotz vorschriftsmäßiger Vergällung oder obgleich die Mittel kein Ethanol, sondern Propanole, enthalten.

In Räumen, in denen elektrische Geräte verwendet werden, muss die Raumtemperatur unterhalb des Flammpunktes des Händedesinfektionsmittels, bei einigen alkoholischen Produkten unterhalb 23°C liegen, da es sonst zu Explosionen durch elektrische Funken, die von den Geräten stammen, kommen könnte. Die Verwendung von alkoholischen Händedesinfektionsmitteln in der Nähe von aktiven Medizinprodukten mit elektrischer Energieversorgung ist deshalb häufig nur unter Missachtung der Sicherheitsregeln möglich.

Die Verwendung von Hypochlorit-Produkten, die neuerdings wieder propagiert wird, ist wegen der massiven Hautschädigungen abzulehnen. Bei den Hautschädigungen ist es unerheblich, ob Alkalihypochlorite verwendet werden oder Chlorkalk, wie von Dr. Ignaz Semmelweis Mitte des 19. Jahrhunderts in Wien in seiner Geburtsklinik vorgeschrieben. Die Schäden in der Haut werden durch die Oxidation und Chlorierung von Zellbestandteilen erzeugt. Dabei ist es theoretisch möglich, dass die durch das Mittel zerstörten Zellbestandteile in Kontakt mit der lebenden Haut gelangen und dann Allergien hervorrufen können. Weil dies seit vielen Jahren bekannt ist, beschränken die Arzneibücher die Verwendung von Wasserstoffperoxid auf eine dreiprozentige Lösung auf Haut oder Wunden, die nicht wirksam entsprechend EN 1499 oder EN 1500 ist.

WO 2013/067150 A2 offenbart in Tabelle 4 eine Zusammensetzung, umfassend 57,3% Wasser, den Löseether Dipropylenglykol (5%), den Fettkörper Phenoxyethanol (1%) und die quarternäre Ammoniumverbindung Benzethoniumchlorid (0,23%). Die Händedesinfektionsmittel in WO 2013/067150 A2 weisen großen Mengen an Ethanol auf. WO 2006/099359 A2 offenbart wässrige Zusammensetzungen mit Dipropylenglykol und Phenoxyethanol. Diese enthalten als wesentlichen Bestandteil Triclosan.

All dieses zeigt, dass es notwendig ist, ein Händedesinfektionsmittel zur Verfügung zu stellen, das mindestens ausreichend wirksam ist entsprechend der EN 1500 und das keine leichtflüchtigen Alkohole und/oder keine hautschädigenden Verbindungen wie Hypochlorit, Chlorit, Chlorat, Peroxid oder Persäure enthält.

Die Notwendigkeit einer sicheren Händedesinfektion ohne Ethanol, die mindestens so gut ist, wie es die EN1500 verlangt, ist so groß, dass in jüngster Zeit Produkte auf dem Markt erschienen sind, die als Wirkstoffe nur quaternäre Ammoniumverbindungen oder Hexetidin oder Guanidin enthalten und die trotzdem die EN1500 bestanden haben sollen. Ein Nachprüfen durch den Erfinder mit diversen eigenen und fremden Produkten, die alle auf der Basis von quaternären Ammoniumverbindungen oder Hexetidin oder Guanidin ohne Ethanol, Propanole oder Glycole aufgebaut waren, zeigte, dass keines dieser Mittel vergleichbar gut oder auch nur nicht signifikant schlechter war als die Referenzsubstanz 60 volumenprozentiges 2-Propanol.

### Beschreibung der Erfindung

Die Aufgabe wurde mit einem Händedesinfektionsmittel der eingangs genannten Art dadurch gelöst, dass der mindestens eine Löse-Ether, Dipropylenglycol, Tripropylenglycol oder Tetrapropylenglycol ist, der mindestens eine Fettkörper Phenoxyethanol, Phenoxypropanol, Isodecanol, Isododecanol, oder Isotridecanol ist, wobei der Gehalt an Fettkörper größer als die Wasserlöslichkeit der Verbindung ist und das mikrobizide kationische Tensid Didecyldimethlyammomiumchlorid, -bromid, oder-iodid ist, wobei das Händedesinfektionsmittel weder Ethanol, noch ein Propanol noch einen anderen Alkohol mit weniger als 9 Kohlenstoffatomen enthält.

Erstaunlicherweise und auch für den Fachmann völlig überraschend hat es sich gezeigt, dass es auf diese Weise möglich ist, Händedesinfektionsmittel zu formulieren, die weder Ethanol, noch ein Propanol, noch einen anderen Alkohol mit weniger als 9 Kohlenstoffatomen enthalten und die trotzdem so wirksam sind wie 60 volumenprozentiges 2-Propanol, wenn entsprechend der EN 1500 getestet wird. Noch erstaunlicher ist, dass die erfindungsgemäßen Produkte unter identischen Bedingungen eine gleichmäßigere Wirkung zeigen als die alkoholischen Produkte nach dem Stand der Technik. Die geringere Schwankungsbreite der Keimreduktion bei der Händedesinfektion erhöht die Sicherheit dieser Hygienemaßnahme, da negative Ausreißer mit verminderter Keimreduktion und deshalb gefährlich hohen Keimbelastungen auf den Händen nach durchgeführter Händedesinfektion seltener sind als bei dem alkoholischen Vergleichsprodukt nach dem Stand der Technik.

Wenn nicht anders vermerkt sind alle Prozentangaben Gewichtsprozente.

Das Desinfektionsmittel umfasst des Weiteren mindestens einen Fettkörper, wobei der Gehalt an Fettkörper größer ist als die Wasserlöslichkeit der Verbindung.

Solche Produkte beruhen auf der Erkenntnis, dass alle flüssigen organischen Verbindungen mit einer begrenzten Wasserlöslichkeit mikrobizid wirksam sind. So ist dies bereits im Wallhäußer von 1988, K.H. Wallhäußer, G. Thieme Verlag Stuttgart, 4. Auflage, S. 427, für mittelkettige Alkohole mit einer Kettenlänge von bis zu acht Kohlenstoffatomen beschrieben. Allerdings weist Wallhäußer in seinem nach ihm benannten Standardwerk darauf hin, dass diese mittelkettigen Alkohole für die Desinfektion und speziell der Händedesinfektion keine Bedeutung hätten, da die geringe Wasserlöslichkeit einen schnellen Wirkungseintritt verhindern würde. Auch von ätherischen Ölen, die alle unter diese Definition fallen, ist dies seit langem bekannt. Diese Öle sind aber wegen ihrer entfettenden Wirkung und ihrer sensibilisierenden Wirkung auf die Haut in Händedesinfektionsmitteln nicht zu verwenden. Bekannt ist auch, dass quaternäre Ammoniumverbindungen, Guanidin oder Hexetidin ohne weiteren Wirkstoff wie Ethanol, Propanol, Propylenglycol, Butandiol oder Glycerin, also nur in Kombination mit Alkoholen oder Glycolen mit einem Molekulargewicht von kleiner 100 Dalton und vollständiger Wasserlöslichkeit auch in Konzentrationen von über vier Prozent die EN1500 nicht bestehen, wenn der Anteil an Alkoholen oder Glycolen nicht für sich selbst bereits ausreichend mikrobizid nach EN 1500 ist.

Vorzugsweise haben Löse-Ether und Fettkörper unabhängig voneinander einen Schmelzpunkt von unter 293 K, bevorzugt unter 283 K, besonders bevorzugt unter 273 K.

Die erfindungsgemäßen Löse-Ether wirken als Lösungsvermittler für die in Wasser ja nur sehr begrenzt löslichen Fettkörper.

Erfindungsgemäße Löse-Ether sind Dipropylenglycol, Tripropylenglycol oder Tetrapropylenglycol.

Erfindungsgemäße Fettkörper sind Phenoxyethanol, Phenoxypropanol, Isodecanol, Isododecanol, oder Isotridecanol.

Das Händedesinfektionsmittel enthält den mindestens einen Löse-Ether zu insgesamt mindestens 20 Gewichtsprozent, besonders bevorzugt zu mindestens 40 Gewichtsprozent und insbesondere zu mindestens 50 Gewichtsprozent .

Ganz besonders bevorzugt enthält das Händedesinfektionsmittel den mindestens einen Fettkörper zu mindestens dem 1,5-fachen seiner Löslichkeit in Wasser. Vorteilhaft ist es, wenn der Fettkörper als reiner Stoff einen Schmelzpunkt hat, der unterhalb der Temperatur der menschlichen Haut liegt. Wichtig ist, dass der Fettkörper bei den Temperaturen, bei denen die Mittel eingesetzt werden, sich auch bei Phasentrennung als flüssige Phase abscheidet. Dies kann möglich sein durch eine geringe Löslichkeit von Wasser in dem reinen Fettkörper oder auch durch einen geringen Anteil an Wirkstoff oder durch Zusatz eines weiteren lösungsvermittelnden Stoffes. Die Wasserlöslichkeit der Fettkörper ist so gering, dass einige von ihnen, oder strukturähnliche Stoffe, in alkoholischen Händedesinfektionsmitteln als Pflegestoffe, sogenannte Rückfetter verwendet werden, ohne dass die besonderen synergistischen Eigenschaften dieser Stoffe erkannt worden sind. Ein Beispiel ist Dodecanol, der rückfettende Pflegestoff aus dem Händedesinfektionsmittel "Sterillium®", einer Mischung von 1-Propanol, 2-Propanol, Wasser, Glycerin und Dodecanol.

Phenoxyethanol, Phenoxypropanol, Isodecanol, Isododecanol, oder Isotridecanol, also alle Verbindungen, die mindestens eine Verzweigung oder einen aliphatischen oder aromatischen Ring in ihrer Kette haben und deshalb einen Schmelzpunkt von unter 273 K, bevorzugt unter 283 K, besonders bevorzugt unter 303 K haben und die einen Siedepunkt von über 373 K haben, sind weder in Wasser löslich, noch sind die kationischen Wirkstoffe, in den organischen nichtpolymeren Verbindungen löslich.

Das Händedesinfektionsmittel enthält des Weiteren 0,1 bis 20% eines mikrobiziden kationischen Tensids, und zwar Didecyldimethlyammomiumchlorid, -bromid, oder -iodid.

Überraschenderweise wurde gefunden, dass erfindungsgemässe Fettkörper die Wirkung von quaternären Ammoniumverbindungen verstärken, wenn sie in dem Händedesinfektionsmittel in Konzentrationen vorhanden sind, die größer ist als ihre Löslichkeit. Anders als bei Emulsionen, bei denen diese Stoffe die Wirksamkeit von quaternären Ammoniumverbindungen nicht verbessern, verbessern sie die Wirksamkeit, wenn sie mit einem erfindungsgemäßen Löse-Ether in dem Produkt klar gelöst werden. Besonders erstaunlich dabei ist, dass die rückfettende Wirkung erhalten bleibt.

Es entsteht eine synergistische Wirkung zwischen Löse-Ether, Fettkörper und quartärer Ammoniumverbindung, so dass diese an sich als nicht ausreichend wirksam bekannten quaternären Ammoniumverbindungen, Guanidin und Hexetidin plötzlich eine ausreichende mikrobizide Wirksamkeit zeigen. Wichtig für die synergistische Wirkung ist nicht die exakte Struktur der Fettkörper, sondern zum einen die Tatsache, dass diese eine merkbare, aber geringe Wasserlöslichkeit von mindestens 0,01, bevorzugt von mindestens 0,2, besonders bevorzugt von mindestens 0,5 Gewichtsprozent bis zu 3, bevorzugt bis zu 2, besonders bevorzugt bis zu 1,5 Gewichtsprozent haben. Die zweite wichtige Eigenschaft ergibt sich aus der Tatsache, dass der Fettkörper die Alkylketten der quaternäre Ammoniumverbindungen, Guanidin und Hexetidin zwar lösen kann, dass aber die Lösungswärme gering oder sogar positiv ist und eine Mischbarkeit nur durch die Entropieerhöhung möglich wird. Merkbar wird dies an einer Viskositätserhöhung.

Besonders bevorzugt sind Produkte, die zwischen 0,2 und 10 Prozent des mikrobiziden kationischen Tensids enthalten und ganz besonders bevorzugt sind Produkte, die zwischen 3 und 6 Prozent an mikrobiziden kationischen Tensiden enthalten. Die Menge an schlecht wasserlöslichem Rückfetter, in dem das kationische mikrobizide Tensid nicht löslich sein darf, kann zwischen 1 Prozent und 50 Prozent des Produktes schwanken. Dabei sind Gehalte von 1,5 Prozent bis 40 Prozent bevorzugt und besonders bevorzugt sind Gehalte zwischen 15 Prozent und 30 Prozent. Wichtig ist, dass die beiden Stoffe in den gewünschten Konzentrationen nicht gemeinsam in Wasser löslich sind. Der Gehalt an Lösevermittlern hängt ab von den beiden anderen Stoffen in dem Produkt, der kationischen Wirksubstanz und dem partiell wasserlöslichen Rückfetter.

Mit dem lösevermittelnden Löse-Ether werden Fettkörper und kationisches Tensid in Wasser klar gelöst. Die Menge an Löse-Ether, die notwendig ist, um das Produkt klar zu stellen, bestimmt die Menge an Löse-Ether. Es können dem Produkt aber auch größere Mengen an Löse-Ether zugesetzt werden.

Das weiterhin in dem Produkt vorhandene Wasser ist zwar für die Wirksamkeit der Produkte nicht notwendig, aber es verbessert die Hautverträglichkeit.

Der Wassergehalt des Produktes sollte nicht über 90 %, besonders bevorzugt nicht über 80 % und besonders bevorzugt nicht über 75 % liegen. Die Mindestmenge an Wasser sollte 40 % nicht unterschreiten, Bevorzugt sind Produkte mit mindestens 50 % Wasseranteil und besonders bevorzugt sind Produkte mit mindestens 60 % Wasseranteil.

Die Erfindung soll im Folgenden mit einigen Beispielen erläutert werden, deren Zusammensetzungen in der folgenden Tabelle 1 angegeben sind:

**Tabelle 1:**

| Inhaltsstoff/ Eigenschaft | Beispiel 1 | Beispiel 2 | Vergleichsbeispiel 1 | Vergleichsbeispiel 2 | Vergleichsbeispiel 3 |
|---|---|---|---|---|---|
| Didecyldimethylammomiumchlorid | 2,00 | 2,00 | 2,00 | 2,00 | |
| Phenoxypropanol | 3,00 | 2,00 | 20,00 | 3,00 | |
| Tripropylenglycol | 33,50 | | | | 50,00 |
| Dipropylenglycol | | 25,00 | | | |
| Ethoxydiglycol | 35,00 | | 35,00 | | |
| Wasser | 60,00 | 71,00 | 43,00 | 39,00 | 95,00 |
| Aussehen: | klar | klar | klar | trüb, getrennt | klar |

Die Produkte nach den Beispielen in der Tabelle wurden auf ihre mikrobiziden Eigenschaften in dem Händedesinfektionsversuch nach EN 1500 getestet und waren mindestens genauso wirksam wie das Referenzprodukt, das 60 Vol-%ige Isopropanol. Die Versuche wurden mit sechs Probenanden je Produkt durchgeführt. Die so erstellten Daten zeigen an, ob ein Produkt wirksam entsprechend EN 1500 ist, wenn der Reduktionsfaktor bei nur sechs Probenaden mindestens so groß ist wie der der Referenz. Im Einzelnen ergaben sich folgende Werte:

**Tabelle 2:**

| Produkt | Reduktionsfaktor | ausreichend wirksam nach EN 1500 | Bemerkungen |
|---|---|---|---|
| 60 Vol.-%iges Propanol | 4,1 - 4,6 | Referenz | |
| Beispiel 1 | 5,0 - 5,5 | Ja | angenehm auf der Haut bei einmaliger Verwendung |
| Beispiel 2 | 4,5 - 5,0 | Ja | angenehm auf der Haut bei mehrfacher Verwendung; Produkt zieht schnell ein |
| Vergleichsbeispiel 1 | 4,5 - 5,0 | Ja | zu fettig auf der Haut |
| Vergleichsbeispiel 2 | | | unangenehm auf der Haut und nicht stabil |
| Vergleichsbeispiel 3 | 4,2 - 4,7 | Ja | Produkt zieht langsam ein |

Neben der mikrobiziden Wirksamkeit in dem Praxisversuch EN 1500 wurde auch das Hautgefühl bewertet, wie in der Tabelle angegeben. Anders als bei Produkten, die neben einer quaternären Ammoniumverbindung oder eines Guanidins noch eine mikrobizide Konzentration an Glycolen enthalten, ist das Hautgefühl bei den erfindungsgemäßen Produkten gut. Die Haut ist nach der Verwendung entspannt. Das Produkt gemäß Beispiel 2 zieht schnell ein, wie es die Arbeitsweise in Kliniken verlangt.

## Patentansprüche

1. Händedesinfektionsmittel, enthaltend
a) mindestens 40 Gewichtsprozent Wasser,
b) mindestens einen Löse-Ether,
c) mindestens einen Fettkörper und
d) 0,1 bis 20 Gewichtsprozent eines mikrobiziden kationischen Tensids
**dadurch gekennzeichnet, dass**
• der mindestens eine Löse-Ether, Dipropylenglycol, Tripropylenglycol oder Tetrapropylenglycol ist,
• der mindestens eine Fettkörper Phenoxyethanol, Phenoxypropanol, Isodecanol, Isododecanol, oder Isotridecanol ist, wobei der Gehalt an Fettkörper größer als die Wasserlöslichkeit der Verbindung ist und
• das mikrobizide kationische Tensid Didecyldimethylammomiumchlorid, -bromid, oder -iodid ist,
wobei das Händedesinfektionsmittel weder Ethanol, noch ein Propanol noch einen anderen Alkohol mit weniger als 9 Kohlenstoffatomen enthält.

2. Händedesinfektionsmittel nach Anspruch 1, **dadurch gekennzeichnet, dass** der Löse-Ether zu mindestens 20 Gewichtsprozent, vorzugsweise zu mindestens 50 Gewichtsprozent enthalten ist.

## Claims

1. A hand disinfecting composition, comprising
a) at least 40 wt% water,
b) at least one dissolving ether,
c) at last one fatty entity and
d) 0.1 to 20 wt% of a microbicidal cationic tenside,
**characterized in that**
• the at least one dissolving ether is dipropylene glycol, tripropylene glycol or tetrapropylene glycol,
• the at least one fatty entity is phenoxy ethanol, phenoxy propanol, isodecanol, isododecanol or isotridecanol, wherein the content of fatty particles is higher than the water solubility of the compound and
• the microbicidal cationic tenside is didecyl-dimethyl-ammonium chloride, bromide or iodide,
wherein the hand disinfecting composition comprises neither ethanol nor a propanol nor any other alcohol having fewer than 9 carbon atoms.

2. A hand disinfecting composition according to claim 1, **characterized in that** the dissolving ether is contained with at least 20 wt%, preferably at least 50 wt%.

## Revendications

1. Désinfectant pour les mains, contenant
a) au moins 40 pour cent en poids d'eau,
b) au moins un éther solvant,
c) au moins un corps gras et
d) 0,1 à 20 pour cent en poids d'un tensioactif cationique microbicide
**caractérisé en ce que**
• l'au moins un éther solvant est le dipropylène glycol, le tripropylène glycol ou le tétrapropylène glycol,
• l'au moins un corps gras est le phénoxyéthanol, le phénoxypropanol, l'isodécanol, l'isododécanol ou l'isotridécanol, dans lequel la teneur en corps gras est supérieure à l'hydrosolubilité du composé et
• le tensioactif cationique microbicide est le chlorure, le bromure ou l'iodure de didécyldiméthylammomium,
dans lequel le désinfectant pour les mains ne contient ni éthanol, ni propanol ni un autre alcool comprenant moins de neuf atomes de carbone.

2. Désinfectant pour les mains selon la revendication 1, **caractérisé en ce que** l'éther solvant est contenu à raison d'au moins 20 pour cent en poids, de préférence à raison d'au moins 50 pour cent en poids.
